(19) Europäisches Patentamt
European Patent Office
Office européen des brevets

(11) EP 1 524 903 B1

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(21) Anmeldenummer: **03763665.1**

(22) Anmeldetag: **30.06.2003**

(51) Int Cl.:
***A01N 43/32*** *(2006.01)* ***A01N 43/50*** *(2006.01)*
***A01P 3/00*** *(2006.01)*

(86) Internationale Anmeldenummer:
**PCT/EP2003/006889**

(87) Internationale Veröffentlichungsnummer:
**WO 2004/006676 (22.01.2004 Gazette 2004/04)**

(54) **FUNGIZIDE MISCHUNGEN AUF BASIS VON DITHIANON**

FUNGICIDAL MIXTURES BASED ON DITHIANON

MELANGES FONGICIDES A BASE DE DITHIANON

(84) Benannte Vertragsstaaten:
**AT BE BG CH CY CZ DE DK EE ES FI FR GB GR HU IE IT LI LU MC NL PT RO SE SI SK TR**

(30) Priorität: **17.07.2002 DE 10232484**

(43) Veröffentlichungstag der Anmeldung:
**27.04.2005 Patentblatt 2005/17**

(73) Patentinhaber: **BASF SE**
**67056 Ludwigshafen (DE)**

(72) Erfinder:
- **AMMERMANN, Eberhard**
  **64646 Heppenheim (DE)**
- **STIERL, Reinhard**
  **67251 Freinsheim (DE)**
- **SCHÖFL, Ulrich**
  **68782 Brühl (DE)**
- **SCHELBERGER, Klaus**
  **67161 Gönnheim (DE)**
- **SCHERER, Maria**
  **76829 Godramstein (DE)**
- **HENNINGSEN, Michael**
  **67227 Frankenthal (DE)**
- **GOLD, Randall, Even**
  **67283 Obrigheim (DE)**

(56) Entgegenhaltungen:
**EP-A- 0 236 689** **EP-A- 0 630 570**
**WO-A-97/06171** **WO-A-02/054870**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 524 903 B1

Printed by Jouve, 75001 PARIS (FR)

## Beschreibung

Die vorliegende Erfindung betrifft fungizide Mischungen, enthaltend

A) die Verbindung der Formel I

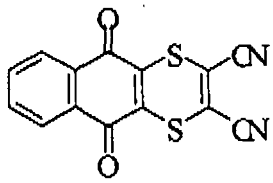

I

und

B) das Imidazolderivat der Formel IIa

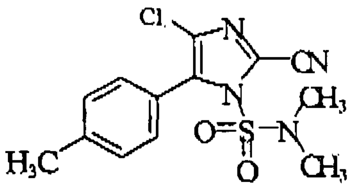

IIa

in einer synergistisch wirksamen Menge.

Außerdem betrifft die Erfindung Verfahren zur Bekämpfung von Schadpilzen mit Mischungen der Verbindungen I und IIa und die Verwendung der Verbindung I und der Verbindung IIa zur Herstellung derartiger Mischungen.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und IIa oder bei Anwendung der Verbindungen I und IIa nacheinander Schadpilze besser bekämpfen lassen als mit den Einzelverbindungen.

Die Verbindung der Formel I (common name: dithianon) sowie Verfahren zu ihrer Herstellung sind in der GB-A 857 383 beschrieben.

Ebenfalls aus der Literatur bekannt sind Imidazolderivate, ihre Herstellung und ihre Wirkung gegen Schadpilze (EP-A 298 196, WO-A 97/06171).

Die Verbindung der Formel IIa (common name: cyazofamid) ist aus EP-A 298 196 bekannt.

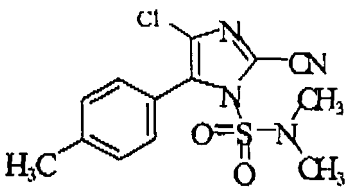

IIa

Weiterhin sind fungizide Mischungen mit anderen Imidazolderivaten aus EP-A 0 630 570 bekannt.

Bevorzugt setzt man bei der Bereitstellung der Mischungen die reinen Wirkstoffe I und IIa ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Üblicherweise kommen Mischungen der Verbindung I mit einem Imidazolderivat IIa zur Anwendung.

Die Mischungen der Verbindungen I und IIa bzw. die gleichzeitige gemeinsame oder getrennte Verwendung

der Verbindungen I und IIa zeichnen sich durch eine hervorragende Wirkung gegen ein breites Spektrum von pflanzenpathogenen Pilzen, insbesondere aus der Klasse der *Ascomycetes*, *Deuteromyceten*, *Oomyceten* und *Basidiomyceten,* aus.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Kaffee, Obstpflanzen, Soja, Wein, Weizen, Zierpflanzen, und einer Vielzahl von Samen.

Insbesondere eignen sie sich zur Bekämpfung der folgenden pflanzenpathogenen Pilze: *Erysiphe cichoracearum* und *Sphaerotheca fuliginea* an Kürbisgewächsen, *Podosphaera leucotricha* an Äpfeln, *Uncinula necator* an Reben, *Ustilago*-Arten an Getreide und Zuckerrohr, *Venturia inaequalis* (Schorf) an Äpfeln, *Botrytis cinerea* (Grauschimmel) an Erdbeeren, Gemüse, Zierpflanzen und Reben, *Cercospora arachidicola* an Erdnüssen, *Phytophthora infestans* an Kartoffeln und Tomaten, *Pseudoperonospora*-Arten an Kürbisgewächsen und Hopfen, *Plasmopara viticola* an Reben, *Alternaria*-Arten an Gemüse und Obst sowie *Fusarium*- und *Verticillium*-Arten.

Die Verbindungen I und IIa können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und IIa werden üblicherweise in einem Gewichtsverhältnis von 100:1 bis 1:10, vorzuasweise 10:1 bis 1:1, insbesondere 5:1 bis 1:1 angewandt.

Die Aufwandmengen für die Verbindungen I liegen in der Regel bei 5 bis 2000 g/ha, vorzugsweise 10 bis 1000 g/ha, insbesondere 50 bis 750 kg/ha und für die Verbindung IIa bei 5 g/ha bis 500 g/ha, vorzugsweise 50 bis 500 g/ha, insbesondere 50 bis 200 g/ha.

Bei der Saatgutbehandlung werden im allgemeinen Aufwandmengen an Mischung von 0,001 bis 100 g/kg Saatgut, vorzugsweise 0,01 bis 0,50 g/kg, insbesondere 0,01 bis 0,1 g/kg verwendet.

Sofern für Pflanzen pathogene Schadpilze zu bekämpfen sind, erfolgt die getrennte oder gemeinsame Applikation der Verbindungen I und IIa oder der Mischungen aus den Verbindungen I und IIa durch Besprühen oder Bestäuben der Samen, der Pflanzen oder der Böden vor oder nach der Aussaat der Pflanzen oder vor oder nach dem Auflaufen der Pflanzen.

Beispiele für Formulierungen sind:

1. Produkte zur Verdünnung in wasser

    A) Wasserlösliche Konzentrate (SL)
    10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

    B) Dispergierbare Konzentrate (DC)
    20 Gew.-Teile der Wirkstoffe werden in Cyclohexanon unter zusatz eines Dispergiermittels z.B. Polyvinylpyrrolidon gelöst. Bei Verdünnung in Wasser ergibt sich eine Dispersion.

    C) Emulgierbare Konzentrate (EC)
    15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

    D) Emulsionen (EW, EO)
    40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

    E) Suspensionen (SC, OD)
    20 Gew.-Teile der Wirkstoffe werden unter Zusatz von Dispergier- und Netzmitteln, und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

    F) Wasserdispergierbare und wasserlösliche Granulate (WG, SG)
    50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

    G) Wasserdispergierbare und wasserlösliche Pulver (WP, SP)
    75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)
5 Gew.Teile der Wirkstoffe werden fein gemahlen und mit 95 % feinteiligem Kaolin innig vermischt. Man erhält dadurch ein Stäubmittel.
I) Granulate (GR, FG, GG, MG)
0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.
J) ULV- Lösungen (UL)
10 Gew.-Teile der Wirkstoffe werden in einem organischen Lösungsmittel z.B. Xylol gelöst. Dadurch erhält man ein Produkt für die Direktapplikation.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.
Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.
Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.
Die Wirkstoffe können auch mit gutem Erfolg im Ultra-Low-volume-Verfahren (ULV) verwendet werden, wobei es möglich ist, Formulierungen mit mehr als 95 Gew.-% wirkstoff oder sogar den Wirkstoff ohne Zusätze auszubringen.
Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.
Die fungizide Wirkung der Verbindungen und der Mischungen läßt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Anwendungsbeispiel 1: Wirksamkeit gegen die Krautfäule an Tomaten verursacht durch *Phytophthora infestans*
Blätter von Topfpflanzen der Sorte "Große Fleischtomate St. Pierre" wurden mit einer wässriger Suspension in der unten angegebenen Wirkstoffkonzentration bis zur Tropfnässe besprüht. Am folgenden Tag wurden die Blätter mit einer kalten wässrigen Zoosporenaufschwemmung von *Phytophthora infestans* mit einer Dichte von 0,25 x $10^6$ Sporen/ml infiziert. Anschließend wurden die Pflanzen in einer wasserdampfgesättigten Kammer bei Temperaturen zwischen 18 und 20°C aufgestellt. Nach 6 Tagen hatte sich die Krautfäule auf den unbehandelten, jedoch infizierten Kontrollpflanzen so stark entwickelt, dass der Befall visuell in % ermittelt werden könnte.
Die Auswertung erfolgt durch Feststellung der befallenen Blattflächen in Prozent. Diese Prozent-Werte werden in Wirkungsgrade umgerechnet.
Der wirkungsgrad (W) wird nach der Formel von Abbot wie folgt berechnet:

$$W = (1 - \alpha/\beta)\cdot 100$$

a entspricht dem Pilzbefall der behandelten Pflanzen in % und

β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade der wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y + z - x \cdot y \cdot z/100$$

E zu erwartender Wirkungsgrad, ausgedrückt in % der unbehandelten Kontrolle, beim Einsatz der Mischung aus den Wirkstoffen A, B und C in den Konzentrationen a, b und c

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

z der Wirkungsgrad, ausgedrückt in % der unbehandelten Kontrolle, beim Einsatz des Wirkstoffs C in der Konzentration c

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | (90 % Befall) | 0 |
| 2 | I (Dithianon) | 15<br>7,5<br>3,73 | 0<br>0<br>0 |
| 3 | IIa<br>(Cyazofamid) | 6<br>3<br>1,5<br>0,75<br>0,375 | 89<br>78<br>67<br>56<br>44 |

Tabelle B - erfindungsgemäße Kombinationen

| Beispiel | Wirkstoffmischung Konzentration Mischungsverhältnis | beobachteter Wirkungsgrad | berechneter Wirkungsgrad*) |
|---|---|---|---|
| 5 | I + IIa<br>15 + 1,5 ppm<br>10 : 1 | 99 | 67 |
| 6 | I + IIa<br>7,5 + 0,75 ppm<br>10 : 1 | 83 | 56 |
| 7 | I + IIa<br>3,75 + 0,375 ppm<br>10 : 1 | 67 | 44 |
| 8 | I + IIa<br>3,75 + 3 ppm<br>1,25 : 1 | 100 | 78 |
| 9 | I + IIa | 100 | 89 |

(fortgesetzt)

| Beispiel | Wirkstoffmischung Konzentration Mischungsverhältnis | beobachteter Wirkungsgrad | berechneter Wirkungsgrad*) |
|---|---|---|---|
| | 3,75 + 6 ppm<br>1 : 1,6 | | |
| *) berechneter Wirkungsgrad nach der Colby-Formel | | | |

Anwendungsbeispiel 2: Wirksamkeit gegen Rebenperonospora verursacht durch *Plasmopara viticola*

Blätter von Topfreben der Sorte "Müller-Thurgau" wurden mit wässriger Suspension in der unten angegebenen Wirkstoffkonzentration bis zur Tropfnässe besprüht. Um die Dauerwirkung der Substanzen beurteilen zu können, wurden die Pflanzen nach dem Antrocknen des Spritzbelages für 3 Tage im Gewächshaus aufgestellt. Erst dann wurden die Blätter mit einer wässrigen Zoosporenaufschwemmung von *Plasmopara viticola* inokuliert. Danach wurden die Reben zunächst für 48 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Tabelle C - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 15 | Kontrolle (unbehandelt) | (96 % Befall) | 0 |
| 16 | I (Dithianon) | 7,5<br>3,73 | 58<br>48 |
| 17 | IIa<br>(Cyazofamid) | 6<br>3<br>0,75<br>0,375 | 16<br>16<br>16<br>6 |

Tabelle D - erfindungsgemäße Kombinationen

| Beispiel | Wirkstoffmischung Konzentration Mischungsverhältnis | beobachteter Wirkungsgrad | berechneter Wirkungsgrad*) |
|---|---|---|---|
| 19 | I + IIa<br>7,5 + 0,75 ppm<br>10 : 1 | 79 | 65 |
| 20 | I + IIa<br>3,75 + 0,375 ppm<br>10 : 1 | 69 | 51 |
| 21 | I + IIa<br>3,75 + 3 ppm<br>1,25 : 1 | 69 | 56 |
| 22 | I + IIa<br>3,75 + 6 ppm<br>1 : 1,6 | 74 | 56 |
| *) berechneter Wirkungsgrad nach der Colby-Formel Aus den Ergebnissen der Versuche geht hervor, daß der beobachtete Wirkungsgrad in allen Mischungsverhältnissen höher ist, als nach der Colby-Formel vorausberechnet. | | | |

## Patentansprüche

**1.** Fungizide Mischung, enthaltend

A) die Verbindung der Formel I

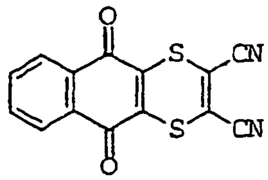

I

und

B) das Imidazolderivat der Formel IIa

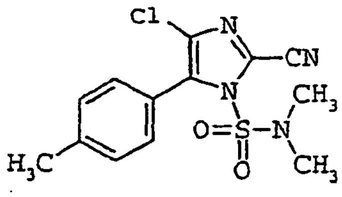

IIa

in einer synergistisch wirksamen Menge.

**2.** Fungizide Mischungen nach Anspruch 1, **dadurch gekennzeichnet, daß** das Gewichtsverhältnis der Verbindung I zu der Verbindung IIa 100:1 bis 1:10 ist.

**3.** Fungizides Mittel, enthaltend einen festen oder flüssigen Trägerstoff und eine Mischung gemäß Anspruch 1.

**4.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen Materialien oder Räume mit der Verbindung der Formel I und dem Imidazolderivat der Formel IIa gemäß Anspruch 1 behandelt.

**5.** Verfahren nach Anspruch 4, **dadurch gekennzeichnet, daß** man die Schadpilze, deren Lebensraum oder die von ihnen freizuhaltenden Pflanzen, Samen, Böden, Flächen, Materialien oder Räume mit 5 bis 2000 g/ha der Verbindung I gemäß Anspruch 1 behandelt.

**6.** Verfahren nach Anspruch 4, **dadurch gekennzeichnet, daß** man die Schadpilze, deren Lebensraum oder die von ihnen freizuhaltenden Pflanzen, Samen, Böden, Flächen, Materialien oder Räume mit 5 bis 500 g/ha der Verbindung IIa gemäß Anspruch 1 behandelt.

## Claims

**1.** A fungicidal mixture, comprising

A) the compound of the formula I

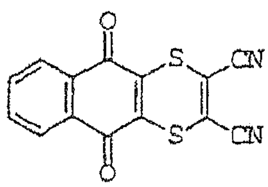

I

and
B) the imidazole derivative of the formula IIa

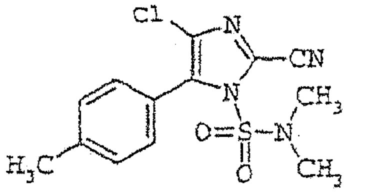

IIa

in a synergistically effective amount.

2. A fungicidal mixture according to claim 1, wherein the weight ratio of the compound I to the compound IIa is from 100:1 to 1:10.

3. A fungicidal composition comprising a solid or liquid carrier and a mixture according to claim 1.

4. A method for controlling harmful fungi, which comprises treating the harmful fungi, their habitat, or the plants, seeds, soils, areas, materials or spaces to be kept free from them with the compound of the formula I and the imidazole derivative of the formula IIa as set forth in claim 1.

5. The method according to claim 4, which comprises treating the harmful fungi, their habitat, or the plants, seeds, soils, areas, materials or spaces to be kept free from them with from 5 to 2000 g/ha of the compound I as set forth in claim 1.

6. The method according to claim 4, which comprises treating the harmful fungi, their habitat, or the plants, seeds, soils, areas, materials or spaces to be kept free from them with from 5 to 500 g/ha of the compound IIa as set forth in claim 1.

## Revendications

1. Mélange fongicide, contenant

A) le composé de formule I

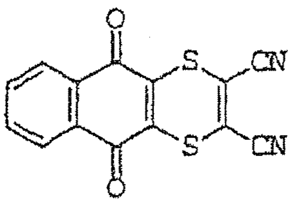

I

et
B) le dérivé d'imidazole de formule IIa

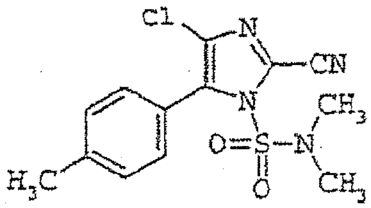

IIa

en une quantité à effet synergique.

2. Mélanges fongicides selon la revendication 1, **caractérisés en ce que** le rapport pondéral du composé I au composé IIa vaut de 100:1 à 1:10.

3. Composition fongicide, contenant une substance de support liquide ou solide et un mélange selon la revendication 1.

4. Procédé pour la lutte contre des champignons nuisibles, **caractérisé en ce qu'**on traite par le composé de formule I et le dérivé d'imidazole de formule IIa selon la revendication 1 les champignons nuisibles, leur habitat ou les plantes, semences, sols, surfaces, matériaux ou espaces à libérer de ceux-ci.

5. Procédé selon la revendication 4, **caractérisé en ce qu'**on traite les champignons nuisibles, leur habitat ou les plantes, semences, sols, surfaces, matériaux ou espaces à libérer de ceux-ci, par 5 à 2 000 g/ha du composé I selon la revendication 1.

6. Procédé selon la revendication 4, **caractérisé en ce qu'**on traite les champignons nuisibles, leur habitat ou les plantes, semences, sols, surfaces, matériaux ou espaces à libérer de ceux-ci, par 5 à 500 g/ha du composé IIa selon la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 857383 A
- EP 298196 A
- WO 9706171 A
- EP 0630570 A


### In der Beschreibung aufgeführte Nicht-Patentliteratur


- **R.S. Colby.** *Weeds,* 1967, vol. 15, 20-22